(19) Europäisches Patentamt
European Patent Office
Office européen des brevets

(11) EP 4 563 671 A1

(12) EUROPEAN PATENT APPLICATION
published in accordance with Art. 153(4) EPC

(43) Date of publication:
**04.06.2025 Bulletin 2025/23**

(21) Application number: **23846844.1**

(22) Date of filing: **03.07.2023**

(51) International Patent Classification (IPC):
***C09J 183/08*** (2006.01) ***C09J 183/06*** (2006.01)
***C09J 4/00*** (2006.01) ***C09J 5/02*** (2006.01)
***C08L 33/06*** (2006.01) ***C08K 5/548*** (2006.01)
***C08K 5/549*** (2006.01) ***C08K 5/544*** (2006.01)
***C08K 5/5435*** (2006.01) ***C08F 220/18*** (2006.01)

(52) Cooperative Patent Classification (CPC):
**C08F 220/18; C08K 5/5435; C08K 5/544; C08K 5/548; C08K 5/549; C08L 33/06; C09J 4/00; C09J 5/02; C09J 183/06; C09J 183/08**

(86) International application number:
**PCT/KR2023/009351**

(87) International publication number:
**WO 2024/025185 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.07.2022 KR 20220092822**

(71) Applicant: **KCC Corporation**
**Seoul 06608 (KR)**

(72) Inventor: **LEE, Jeonghyun**
**Ulsan 44262 (KR)**

(74) Representative: **Pfenning, Meinig & Partner mbB**
**Patent- und Rechtsanwälte**
**Theresienhöhe 11a**
**80339 München (DE)**

# (54) PRIMER COMPOSITION FOR GLASS ADHESIVE

(57) The present invention relates to a primer composition for a glass adhesive, comprising a first silane oligomer, a second silane oligomer, and an acryl polymer, wherein the first silane oligomer contains an amino group and an epoxy group and the second silane oligomer contains a mercapto group and a hydroxyl group.



Processed by Luminess, 75001 PARIS (FR)

## Description

### TECHNICAL FIELD

The present invention relates to a primer composition for glass adhesive having excellent preservability during storage and excellent glass adhesion.

### BACKGROUND ART

When glass is bonded to the painted surface of a car body, the adhesion between the painted surface and glass, which are different materials from each other, was insufficient, causing the glass to be pushed or separated from the painted surface. Therefore, in order to prevent such problem, a primer may first be applied to the painted surface and/or glass surface, and then a moisture-curing adhesive (e.g., DGU) may be applied over the primer to allow bonding. At this time, the moisture-curing adhesive may comprise a resin component such as a urethane resin, which is a reaction product of isocyanate and polyol, a pigment component such as carbon black and calcium carbonate, and a plasticizer such as diisononyl phthalate (DINP). In addition, the primer may comprise film forming agents such as epoxy resins, silane polymers and acrylic resins; and pigments such as carbon black; and additives such as inorganic fillers (e.g., titanium oxide, calcium carbide and silicic anhydride).

However, the additives such as pigments or inorganic fillers contained in the primer to improve the adhesive strength and physical properties had a problem in that the additive particles precipitated within the composition during storage, resulting in reduced preservability. In order to solve such problem, it has been common to add a dispersant to a primer.

As an alternative thereto, Korean Laid-open Patent Publication No. 2017-0016433 (Patent Document 1) discloses a primer composition comprising an acrylic copolymer, a titanium compound and a solvent. However, the composition of Patent Document 1 had problems in that it had poor adhesion due to lack of wetting properties with the ceramic coating surface of automobile glass, and had poor water resistance and chemical resistance due to the monosilane and titanium compounds.

Therefore, there is a need for research and development on a primer composition for glass adhesives that has excellent preservability and excellent adhesion and bonding strength between glass and an adhesive.

### PRIOR ART CITATIONS

### PATENT CITATIONS

Korean Laid-open Patent Publication No. 2017-0016433 (Publication Date: February 13, 2017)

### SUMMARY OF INVENTION

### TECHNICAL PROBLEM

One object of the present invention is to provide a primer composition for glass adhesives having excellent preservability during storage and excellent glass adhesion.

### SOLUTION TO PROBLEM

In one embodiment, the present invention can provide a primer composition for glass adhesives, comprising a first silane oligomer, a second silane oligomer, and an acrylic polymer, wherein the first silane oligomer contains an amino group and an epoxy group and the second silane oligomer contains a mercapto group and a hydroxyl group.

In another embodiment, the present invention can provide a primer composition for glass adhesives, wherein the second silane oligomer further comprises a cyclodioxy structure.

In another embodiment, the present invention can provide a primer composition for glass adhesives, wherein the second silane oligomer comprises a compound represented by the following formula 1:

[Formula 1]

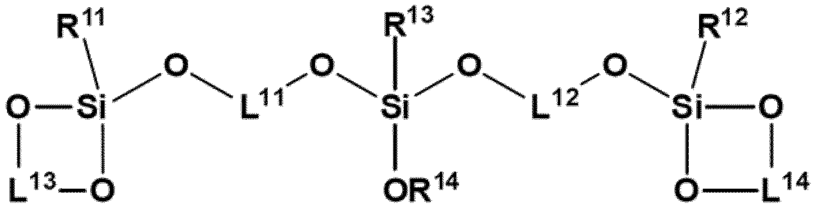

wherein $R^{11}$, $R^{12}$, and $R^{13}$ are each independently a straight-chain or branched-chain $C_{1-10}$ alkyl group substituted with a mercapto group; $L^{11}$, $L^{12}$, $L^{13}$, and $L^{14}$ are a straight-chain or branched-chain $C_{1-10}$ alkylene group; and $R^{14}$ is a hydrogen, or a straight-chain or branched-chain $C_{1-10}$ alkyl group substituted with a hydroxyl group.

In another embodiment, the present invention can provide a primer composition for glass adhesives, wherein the first silane oligomer is prepared from a first silane composition comprising an amino silane and an epoxy silane in a weight ratio of 1:1.5 to 3.2, and has an epoxy equivalent weight (EEW) of 2,000 to 15,000 g/eq and a weight average molecular weight of 500 to 3,000 g/mol.

In another embodiment, the present invention can provide a primer composition for glass adhesives, wherein the acrylic polymer is prepared by polymerizing an acrylic composition comprising an alkyl group-containing (meth)acrylate monomer and a hydroxyl group- and an aromatic ring-containing (meth)acrylate monomer.

In another embodiment, the present invention can provide a primer composition for glass adhesives, wherein the primer composition for glass adhesives comprises 25 to 45 parts by weight of a first silane oligomer, 3 to 15 parts by weight of a second silane oligomer, and 10 to 20 parts by weight of an acrylic polymer, per 100 parts by weight of the primer composition for glass adhesives.

## ADVANTAGEOUS EFFECTS OF INVENTION

The primer composition for glass adhesives according to one aspect of the present invention comprises two types of silane oligomers with different functional groups and has excellent adhesion due to a rapid coupling reaction (condensation reaction) with glass and, therefore, is suitable for use as a primer.

## BRIEF DESCRIPTION OF DRAWINGS

FIG. 1 is a drawing showing the synthesis process of Cu-ASTM-FITC according to the present invention.

## MODE FOR INVENTION

Hereinafter, the present invention will be described in detail.

Unless otherwise specified herein, the term "alkyl" refers to a straight or branched-chain saturated monovalent hydrocarbon chain, and "alkylene" refers to a straight or branched-chain saturated polyvalent hydrocarbon chain.

As used herein, the term "weight average molecular weight" and "number average molecular weight" of the resin may be measured by methods well known in the art, and may represent values measured by, for example, gel permeation chromatograph (GPC).

As used herein, the term "(meth)acrylic" refers to "acrylic" and/or "methacrylic," and the term "acrylate system" refers to "acrylate" and/or "methacrylate."

As used herein, the unit "parts by weight" refers to a weight ratio between components.

The primer composition for glass adhesives according to one embodiment of the present invention comprises a first silane oligomer, a second silane oligomer and an acrylic polymer. The primer composition for glass adhesives of the present invention comprises a silane oligomer having two different reactive groups, and can have excellent adhesion due to reaction with a substance formed on the surface of glass or chemical bonding (coupling reaction) with glass.

The primer composition for glass adhesives of the present invention forms a structure in which an oily or water-based adhesive applied to one surface of a primer in a subsequent process and a primer film are chemically bonded to each other as a single network, such that the composition exhibits excellent adhesion and solvent resistance, and can act as a primer having excellent adhesion and bonding strength between the organic film (substrate) formed by curing the adhesive and the inorganic surface, which is a glass surface.

In addition, two different silane oligomers can be hydrolyzed by a solvent to form silanols, which can form urethane bonds with the excess isocyanate of the subsequently applied moisture-curing urethane adhesive and, at the same time, form siloxane bonds with a silicon compound at the part that comes into contact with the glass surface, such that the adhesion between the glass surface-primer-urethane adhesive layer can be improved.

### First silane oligomer

A first silane oligomer can provide the prepared coating film with an adhesive (base) and glass adhesion and bonding properties.

The first silane oligomer comprises an epoxy group and an amino group, and may be prepared from a first silane composition comprising an epoxy silane and an amino silane. Specifically, the first silane oligomer may be prepared by reacting the first silane composition comprisingan epoxy silane and an amino silane at 40 to 60 °C for 20 to 50 hours.

Meanwhile, the first silane composition may comprise amino silane and epoxy silane in a weight ratio of 1:1.5 to 3.2.

The epoxy silane may be, for example, a glycidoxy$C_{1-5}$ alkyl$C_{1-5}$ alkoxysilane and, specifically, a glycidoxy$C_{1-5}$ alkyltri$C_{1-5}$ alkoxysilane. More specifically, the epoxy silane may be glycidoxymethyltrimethoxysilane, glycidoxyethyltrimethoxysilane, glycidoxypropyltrimethoxysilane, glycidoxymethyltriethoxysilane, glycidoxyethyltriethoxysilane, glycidoxypropyltriethoxysilane, glycidoxymethyltripropoxysilane, glycidoxyethyltripropoxysilane or glycidoxypropyltripropoxysilane, but the present invention is not limited thereto.

**The** amino silane may be, for example, a silane comprising one or more amino groups, or may be, for example, a silane comprising two or more amino groups. Specifically, the amino silane may be an amino$C_{1-5}$alkyl-tri$C_{1-5}$alkoxy silane and, for example, aminomethyl-trimethoxy-silane, aminoethyl-trimethoxy-silane, aminopropyl-trimethoxy-silane or aminoethyl-aminopropyl-trimethoxy-silane, but the present invention is not limited thereto.

A first solvent may be used to react an epoxy silane with an amino silane, and the first solvent may be methyl ethyl ketone, ethyl acetate, dimethyl carbonate, methanol or n-butanol.

An amino silane and an epoxy silane may react in a weight ratio of 1:0.9 to 5 or 1:1.5 to 3.2. **If** the weight ratio of the reaction of the amino silane and the epoxy silane is less than the above-described range, that is, if the epoxy silane is used in a small amount, as compared to the amino silane, unreacted amino groups may exist in the composition in excess, reducing the weather resistance and water resistance of the coating film, and the preservability may deteriorate during storage. **If** the weight ratio of the reaction of the amino silane and the epoxy silane exceeds the above-described range, that is, if the epoxy silane is used in an excessive amount, as compared to the amino silane, the adhesion with the adhesive (substrate) may be reduced due to lack of attachment functional groups.

The first silane composition may comprise a solvent, and the solvent may be methyl ethyl ketone, dimethyl carbonate or methanol. The first silane composition may comprise 70 wt % or less, or 60 to 70 wt % of the solvent, based on the total weight.

The first silane oligomer may have an epoxy equivalent weight (EEW) of 2,000 to 15,000 g/eq, or 3,000 to 13,000 g/eq, and a weight average molecular weight (Mw) of 500 to 3,000 g/mol, or 1,000 to 3,000 g/mol. If the epoxy equivalent weight and weight average molecular weight of the first silane oligomer are within the above-described ranges, excellent storage properties and adhesion are achieved. If the epoxy equivalent weight of the first silane oligomer is below the above-described range, the low epoxy equivalent weight may cause a problem of reduced preservability due to reduced dispersibility of a pigment and/or additive particles. If the epoxy equivalent weight of the first silane oligomer is high, the first silane oligomer may react with an isocyanate group of a urethane adhesive applied later to form microbubbles, thereby causing a problem of reduced adhesion. In addition, if the weight average molecular weight of the first silane oligomer is below the above-described range, there is a problem of reduced preservability, and, if the weight average molecular weight exceeds the above-described range, there may be a problem of reduced adhesion.

The first silane oligomer may be contained in the primer composition for glass adhesives in an amount of 25 to 45 parts by weight per 100 parts by weight of the primer composition for glass adhesives. If the content of the first silane oligomer is within the above-described range, the long-term preservability of the primer and the adhesion to glass may be improved. If the content of the first silane oligomer is less than the above-described range, the preservability may be reduced, and, if the content of the first silane oligomer exceeds the above-described range, the adhesion may be reduced due to lack of attachment functional groups with the adhesive.

In addition, the first silane oligomer and the second silane oligomer described below may be contained in the primer composition for glass adhesives in a weight ratio of 25 to 45 parts by weight : 3 to 15 parts by weight. If the primer composition for glass adhesive comprises the first silane oligomer and the second silane oligomer in a weight ratio within the above-described range, excellent adhesion is achieved.

### Second silane oligomer

The second silane oligomer serves to provide a prepared coating with adhesion to a substrate, which is an adhesion surface, and to glass.

Generally, when a silane compound has a high molecular weight in the form of an oligomer, the condensation reaction rate decreases. However, the second silane oligomer of the present invention forms a glycol compound upon hydrolysis due to the cyclodioxy structure contained in the molecule, thereby increasing the bonding rate (coupling

reaction) with the glass surface, such that improved workability and adhesion to the glass surface can be achieved when forming a primer film.

In one embodiment, the second silane oligomer of the present invention is a polymer formed by linking a plurality of siloxane bonds (Si-O bonds) and may comprise a mercapto group (-SH) and a hydroxyl group (-OH). The second silane oligomer of the present invention may preferably comprise three or more mercapto groups (-SH) and one or more hydroxyl groups (-OH) in the molecule.

In another embodiment, the second silane oligomer of the present invention may further comprise a cyclodioxy structure. More specifically, the second silane oligomer of the present invention may comprise a cyclodioxy structure that forms a ring by bonding to Si within the molecule.

The mercapto group and hydroxyl group react with the NCO group contained in the urethane adhesive to improve adhesion and binding between an adhesive and a primer. Specifically, the mercapto group is hydrophobic and, thus, has excellent bonding properties with the urethane adhesive such that it has excellent water/chemical resistance in the process of forming a coating film, and the hydroxyl group has hydrophilic properties to improve adhesion to glass.

In another embodiment, the second silane oligomer of the present invention may comprise a compound represented by the following formula 1:

[Formula 1]

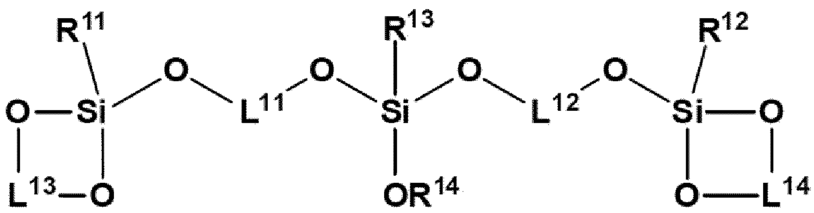

In formula 1,

$R^{11}$, $R^{12}$, and $R^{13}$ each may be independently a straight-chain or branched-chain $C_{1-10}$ alkyl group substituted with a mercapto group,
$L^{11}$, $L^{12}$, $L^{13}$, and $L^{14}$ may be a straight-chain or branched-chain $C_{1-10}$ alkylene group, and
$R^{14}$ may be a hydrogen, or a straight-chain or branched-chain $C_{1-10}$ alkyl group substituted with a hydroxyl group.

In another embodiment, in formula 1,

$R^{11}$, $R^{12}$, and $R^{13}$ each may be independently a straight-chain $C_{1-5}$ alkyl group whose terminal carbon is substituted with a mercapto group, or preferably an n-propyl group whose terminal carbon is substituted with a mercapto group,
$L^{11}$, $L^{12}$, $L^{13}$, and $L^{14}$ each may be independently a $C_{1-5}$ alkylene group substituted with a methyl group, or preferably a 2-methyl-propylene group, and
$R^{14}$ may be a $C_{1-5}$ alkyl group whose terminal carbon is substituted with a hydroxyl group and the carbon adjacent to the terminal carbon is substituted with a methyl group, or preferably a 2-methyl-3-hydroxypropyl group.

In particular, in the second silane oligomer of formula 1, the cyclodioxy structure comprising $L^{13}$ or $L^{14}$ may be hydrolyzed through reaction to form glycol, thereby improving the bonding speed with the surface of glass.

In the present invention, the second silane oligomer may be contained in the primer composition for glass adhesives in an amount of 3 to 15 parts by weight, per 100 parts by weight of the composition. If the content of the second silane oligomer compound is less than the above-described range, there may be a problem of reduced adhesion and pot life adhesion, and, if it exceeds the above-described range, there may be a problem of reduced preservability.

The second silane oligomer may have a density at 25°C of 1.105 gm/$cm^3$, a viscosity at 25°C of 100 to 400 cPs, and a weight average molecular weight (Mw) of 200 to 500 g/mol, or 300 to 400 g/mol.

## Acrylic polymer

An acrylic polymer may impart tackiness and adhesion to a primer composition for glass adhesives.

The acrylic polymer may be directly synthesized by a known method or may be a commercially available product. The acrylic polymer may be prepared by, for example, polymerizing an acrylic composition comprising an alkyl group-containing (meth)acrylate monomer and a hydroxyl group- and an aromatic ring-containing (meth)acrylate monomer.

The alkyl group-containing (meth)acrylate monomer improves the adhesiveness and adhesion of the acrylic

polymer. The hydroxyl group- and aromatic ring-containing (meth)acrylate monomer forms attachment sites (-OH) with the adhesive, thereby improving the adhesion of the composition and the weather resistance of the primer.

Specifically, the acrylic polymer may be prepared by polymerizing an acrylic composition comprising a $C_{1-3}$ alkyl group-containing (meth)acrylate monomer, a $C_{4-10}$ alkyl group-containing (meth)acrylate monomer, and a hydroxyl group- and a $C_{6-12}$ aromatic ring-containing (meth)acrylate. For example, the acrylic composition may comprise the $C_{1-3}$ alkyl group-containing (meth)acrylate monomer, the $C_{4-10}$ alkyl group-containing (meth)acrylate monomer, and the hydroxyl group- and a $C_{6-12}$ aromatic ring-containing (meth)acrylate in a weight ratio of 1 : 0.1 to 5 : 0.01 to 1, or 1 : 0.5 to 2 : 0.1 to 0.5. If the weight ratio of the monomers satisfies the range, film formability, adhesiveness (tackiness), and adhesion can be improved.

If the content of the $C_{4-10}$ alkyl group-containing (meth)acrylate monomer is less than the above-described range, that is, if the $C_{4-10}$ alkyl group-containing (meth)acrylate monomer is contained in a small amount, as compared to the $C_{1-3}$ alkyl group-containing (meth)acrylate monomer, the film formability and adhesion may be inferior. If the content of the $C_{4-10}$ alkyl group-containing (meth)acrylate monomer exceeds the above-described range, that is, if the $C_{4-10}$ alkyl group-containing (meth)acrylate monomer is contained in an excessive amount, as compared to the $C_{1-3}$ alkyl group-containing (meth)acrylate monomer, the preservability may be reduced.

If the content of the hydroxyl group- and a $C_{6-12}$ aromatic ring-containing (meth)acrylate is less than the above-described range, that is, if the hydroxyl group- and a $C_{6-12}$ aromatic ring-containing (meth)acrylate is contained in a small amount, as compared to the $C_{1-3}$ alkyl group-containing (meth)acrylate monomer, there is a problem that the curing reaction is insufficient and the film formation is reduced. If the content of the hydroxyl group- and a $C_{6-12}$ aromatic ring-containing (meth)acrylate exceeds the above-described range, that is, if the (meth)acrylate containing a hydroxyl group and a $C_{6-12}$ aromatic ring is contained in an excessive amount, as compared to the $C_{1-3}$ alkyl group-containing (meth) acrylate monomer, there may be a problem of poor preservability.

The acrylic polymer may be prepared by polymerizing an acrylic composition at 60 to 100°C for 5 to 20 hours.

The acrylic composition may comprise a solvent, and the solvent may be methyl ethyl ketone, ethyl acetate, butyl acetate, dimethyl carbonate or n-butanol. The acrylic composition may comprise 80 wt % or less, or 60 to 80 wt % of the solvent, based on the total weight.

In addition, the acrylic composition may further comprise an epoxy group-containing (meth)acrylate monomer. The epoxy group-containing (meth)acrylate monomer may be, for example, glycidyl (meth)acrylate or methyl glycidyl acrylate.

The acrylic polymer may have a weight average molecular weight (Mw) of 150,000 to 250,000 g/mol, 170,000 to 220,000 g/mol, or 180,000 to 200,0000 g/mol. If the weight average molecular weight of the acrylic polymer is within the above-described range, excellent adhesion and workability are effectively exhibited. If the weight average molecular weight of the acrylic polymer is less than the above-described range, adhesion to the substrate may be reduced, and, if it exceeds the above-described range, preservability may be reduced.

The acrylic polymer may have a glass transition temperature (Tg) of 30 to 70°C, 40 to 60°C, or 45 to 55°C. If the glass transition temperature of the acrylic polymer is within the above-described range, excellent adhesion and workability are effectively achieved. In addition, if the glass transition temperature of the acrylic polymer is below the above-described range, adhesion to the substrate may be reduced, and, if it exceeds the above-described range, preservability may be reduced.

The acrylic polymer may have a viscosity at 25°C of 200 to 1,500 cps, 400 to 1,000 cps, or 600 to 850 cps. If the viscosity of the acrylic polymer at 25°C is within the above-described range, excellent adhesion and workability are effectively achieved. If the viscosity of the acrylic polymer is below the above-described range, adhesion to the substrate may be reduced, and, if it exceeds the above-described range, preservability may be reduced.

The acrylic polymer may be contained in the primer composition for glass adhesives in an amount of 10 to 20 parts by weight per 100 parts by weight of the primer composition for glass adhesives. If the content of the acrylic polymer is within the above-described range, excellent adhesion and workability may be achieved. If the content of the acrylic polymer is less than the above-described range, there may be a problem of reduced adhesion to the substrate, and, if it exceeds the above-described range, there may be a problem of reduced preservability.

**Pigment**

A primer composition for glass adhesives according to one embodiment of the present invention may or may not comprise a pigment selectively depending on the conditions and environment for using a primer, and the process conditions for using a primer.

If the primer composition for glass adhesives of the present invention comprises a pigment, the pigment can implement various colors in the primer composition depending on the type used, and can improve the physical properties of the primer composition, such as weather resistance, durability and strength.

The pigment may be used without special restrictions as long as it is contained in the primer composition of the

present invention and does not deteriorate its properties and functions. For example, the pigment may be body pigments, white pigments, black pigments, yellow pigments, red pigments, blue pigments, green pigments, metal powder pigments, pearl pigments or metallic pigments.

Preferably, the pigment may comprise a constitution pigment (e.g., barium sulfate ($Ba_2SO_4$) (barite), barite, calcium carbonate ($CaCO_3$), clay (clay, $Al_2O_3 \cdot 2SiO_2 \cdot 2H_2O$), bone meal ($3MgO \cdot 4SiO_2 \cdot H_2O$), quartz powder ($SiO_2$), diatomaceous earth ($SiO_2 \cdot nH_2O$), silica, bentonite, talc (Talc), and aluminum silicate); a white pigment (e.g., titanium oxide ($TiO_2$), zinc oxide ($ZnO$), lithopon, zinc sulfide, lead white ($2PbCO_3 \cdot Pb(OH)_2$), and antimony oxide ($Sb_2O_3$)); a black pigment (e.g., carbon black, graphite, and iron black ($Fe_3O_4$)); a yellow pigment (e.g., lead chromite ($PbCrO_3$), zinc chromate, cadmium yellow ($CdS$), lead cyanamide ($PbCN_2$), titanium yellow ($TiO_2$-$NiOSb_2O_3$), and strontium yellow ($SrCrO_4$)); a red pigment (e.g., iron red ($Fe_2O_3$), lead ($Pb_3O_4$), silver sulphate ($HgS$), cadmium red (mixed crystal of CdS and HgS), molybdenum red (mixed crystal of $PbCrO_4$, $PbMoO_4$, and $PbSO_4$), and cuprous oxide ($Cu_2O$)); a blue pigment (e.g., prussian blue ($MFe[Fe(CN)_6]$, wherein M is K, $NH_4$, or Na), ultramarine ($2(Al_2Na_2Si_3O_{10}) \cdot Na_2S_4$), and cobalt blue ($CoO \cdot nAl_2O_3$)); a green pigment (e.g., chromium green (a mixture of $PbCrO_4$ and pewter $KFe[Fe(CN)_6]$), chromium oxide ($Cr_2O_3$), and chromium hydroxide ($Cr_2O_3 \cdot 2H_2O$)); a metal powder pigment (e.g., silver powder (aluminum powder) and gold powder (bronze powder)); and a pearl pigment (e.g., natural pearl essence, and synthetic pearl pigment). Carbon black may be used to improve the color and weather resistance of the primer composition for glass adhesives of the present invention.

The pigment may be contained in the primer composition for glass adhesives in an amount of 5 to 10 parts by weight or 7 to 9 parts by weight, based on 100 parts by weight of the primer composition for glass adhesives. If the content of the pigment is less than the above-described range, the hiding properties and appearance characteristics of the cured primer coating may deteriorate. If the content of the pigment exceeds the above-described range, the dispersibility of the pigment in the primer composition may deteriorate, requiring a long time for dispersion, or the prepared primer composition may experience a sedimentation phenomenon during storage, which may cause problems such as deterioration of the storage stability and product reliability of the primer composition.

**Solvent**

The primer composition for glass adhesives of the present invention may further comprise a solvent. The solvent can control the viscosity and drying properties of the composition.

The solvent is not particularly limited as long as it may be added to a typical glass primer composition. For example, the solvent may be an aromatic hydrocarbon such as toluene and xylene; an aliphatic hydrocarbon such as hexane, octane and isoparaffin; a ketone such as acetone, methyl ethyl ketone and methyl isobutyl ketone; an acetate such as ethyl acetate and isobutyl acetate; an ether such as diisopropyl ether and 1,4-dioxane; or a carbonate such as dimethyl carbonate and diethyl carbonate.

The solvent may be contained in the primer composition for glass adhesives in an amount of 20 to 40 parts by weight, or 25 to 35 parts by weight, based on 100 parts by weight of the primer composition for glass adhesives. If the content of the solvent is less than the above-described range, the viscosity of the primer composition may become excessively high, which may deteriorate the dispersibility of the pigment in the composition and the storage stability of the composition. If the content of the solvent exceeds the above-described range, the viscosity of the primer composition may become excessively low, which may cause the coating to flow between the coating layers or the coating film to be formed unevenly during application, and problems such as poor adhesion to the substrate or adhesive and poor weather resistance of the prepared coating film may occur.

**Additives**

The primer composition for glass adhesives of the present invention may further comprise one or more additives, such as a storage stabilizer, a dispersant and a moisture absorbent, to improve the physical properties of the coating film.

The additive may be contained in the primer composition in an amount of 1 to 5 parts by weight, or 1.5 to 3.5 parts by weight, per 100 parts by weight of the primer composition for glass adhesives.

The storage stabilizer can improve the workability by extending the pot life of the primer composition, and can improve the storage stability by preventing the precipitation of a pigment in the composition. The storage stabilizer is not particularly limited as long as it can be commonly applied to a primer composition for glass adhesives. For example, the storage stabilizer may be diethyl malonate, trimethyl orthoacetate, methanol, ethanol, isopropyl alcohol, or trimethyl orthoformate, and the present invention is not limited thereto.

A dispersant can improve the storage stability of the composition by uniformly and stably dispersing the pigment within the composition. The dispersant is not particularly limited unless it is usually applied to a glass primer to lower the physical properties, and commercially available products comprise EFKA PU 4061, LUBRIZOL 2063, DISPERBYK-180, DISPERBYK-110, and DISPERBYK-2152, but the present invention is not limited thereto.

The moisture absorbent can improve workability by controlling the moisture content of the primer composition. The moisture absorbent is not particularly limited as long as it can be commonly applied to glass primers. For example, the moisture absorbent may comprise sodium/calcium aluminosilicate, zeolite, aldimine, oxazolidine or trimethoxyvinylsilane, but the present invention is not limited thereto.
The primer composition for glass adhesive according to the present invention as described above has excellent storage stability and excellent adhesive strength with glass, and is therefore suitable for use in fixing glass in automobiles.
Hereinafter, the present invention will be described in detail by the following embodiments. However, the following embodiments are only for illustrating the present invention, and the present invention is not limited thereto.

## Examples

### Synthesis Example 1. Preparation of first silane oligomer-1

In a reaction vessel, 3.57 g of N-(beta-aminoethyl)-gamma-aminopropyl-trimethoxy-silane, 8.3 g of gamma-glycidoxypropyltrimethoxysilane, 7.71 g of methyl ethyl ketone, 15.61 g of dimethyl carbonate, and 1.14 g of methanol were placed, and the mixture was reacted at 60°C for 48 hours to prepare a first silane oligomer-1.
The prepared first silane oligomer-1 had an epoxy equivalent weight (EEW) of 3,500 g/eq and a weight average molecular weight (Mw) of 2,800 g/mol.

### Synthesis Example 2. Preparation of first silane oligomer-2

In a reaction vessel, 3.91 g of N-(beta-aminoethyl)-gamma-aminopropyl-trimethoxy-silane, 9.1 g of gamma-glycidoxypropyltrimethoxysilane, 8.45 g of methyl ethyl ketone, 17.11 g of dimethyl carbonate, and 1.25 g of methanol were placed, and the same method as in Synthesis Example 1 was used to prepare a first silane oligomer-2.
The prepared first silane oligomer-2 had an epoxy equivalent weight (EEW) of 3,500 g/eq and a weight average molecular weight (Mw) of 2,800 g/mol.

### Synthesis Example 3. Preparation of acrylic polymer-1

In a reaction vessel, 1.83 g of methyl methacrylate (MMA), 2.13 g of butyl methacrylate (BMA), 0.79 g of 2-hydroxy-3-phenoxypropylacrylate (HPPA), 0.07 g of tert-butyl peroxide, and 9.48 g of methyl ethyl ketone (MEK) were placed, and the mixture was reacted at 80°C for 12 hours to prepare an acrylic polymer-1.
The prepared acrylic polymer-1 had a weight average molecular weight (Mw) of 200,000 g/mol, a glass transition temperature (Tg) of 48.1°C, and a viscosity of 800 cps at 25°C.

### Synthesis Example 4. Preparation of acrylic polymer-2

In a reaction vessel, 2.00 g of methyl methacrylate (MMA), 2.33 g of butyl methacrylate (BMA), 0.87 g of 2-hydroxy-3-phenoxypropylacrylate (HPPA), 0.07 g of tert-butyl peroxide, and 10.40 g of methyl ethyl ketone (MEK) were placed, and the same method as in Synthesis Example 13 was used to prepare an acrylic polymer-2.
The prepared acrylic polymer-2 had a weight average molecular weight (Mw) of 200,000 g/mol, a glass transition temperature (Tg) of 48.1°C, and a viscosity of 800 cps at 25°C.

### Experimental Examples 1 to 6. Preparation of Primer Composition

In a reaction vessel, a first silane oligomer, a second silane oligomer, an acrylic polymer, carbon black as a pigment, a storage stabilizer, ethyl acetate, dimethyl carbonate, a moisture absorbent, and a dispersant were placed in the amounts shown in Table 1, and stirred at 600 rpm for 20 minutes by using a high-speed stirrer to prepare a primer composition.

[Table 1]

| Component(un it: g) | | Experiment al Example 1 | Experiment al Example 2 | Experiment al Example 3 | Experiment al Example 4 | Experiment al Example 5 | Experiment al Example 6 |
|---|---|---|---|---|---|---|---|
| First si-lane oli-gomer | 1 | 36.33 | | 36.33 | 36.33 | 36.33 | 36.33 |
| | 2 | | 39.82 | | | | |

(continued)

| Component(un it: g) | | Experimental Example 1 | Experimental Example 2 | Experimental Example 3 | Experimental Example 4 | Experimental Example 5 | Experimental Example 6 |
|---|---|---|---|---|---|---|---|
| Second silane oligomer | | 7.00 | 7.67 | 5.00 | 5.00 | 15.00 | 15.00 |
| Acrylic polymer | 1 | 14.30 | | 14.30 | | 14.30 | |
| | 2 | | 15.67 | | 15.67 | | 15.67 |
| Pigment (carbon black) | | 7.00 | | 7.00 | | 7.00 | |
| Storage stabilizer | | 0.60 | 0.66 | 0.60 | 0.66 | 0.60 | 0.66 |
| Ethyl acetate | | 18.30 | 20.06 | 18.30 | 22.06 | 13.30 | 16.06 |
| Dimethyl carbonate | | 14.70 | 16.11 | 16.70 | 20.11 | 11.70 | 16.11 |
| Moisture absorbent | | 0.36 | | 0.36 | | 0.36 | |
| Dispersant | | 1.40 | | 1.40 | | 1.40 | |

**Experimental Examples 7 to 17. Preparation of Primer Composition**

In a reaction vessel, a first silane oligomer, a second silane oligomer, a comparative silane oligomer, a comparative silane compound, an acrylic polymer, carbon black as a pigment, a storage stabilizer, an epoxy resin, ethyl acetate, dimethyl carbonate, a moisture absorbent, and a dispersant were placed in the amounts shown in Tables 2 and 3, and stirred at 600 rpm for 20 minutes by using a high-speed stirrer to prepare a primer composition.

[Table 2]

| Component(un it: g) | | Experimental Example 7 | Experimental Example 8 | Experimental Example 9 | Experimental Example 10 | Experimental Example 11 | Experimental Example 12 |
|---|---|---|---|---|---|---|---|
| First silane oligomer | 1 | | 36.33 | 36.33 | 36.33 | 36.33 | 36.33 |
| | 2 | | | | | | |
| Second silane oligomer | | 7.00 | | 16.00 | | | |
| Comparative silane oligomer | 1 | | | | 7.00 | | |
| | 2 | | | | | 7.00 | |
| Comparative silane compound | 1 | | | | | | 7.00 |
| | 2 | | | | | | |
| Acrylic polymer | 1 | 14.30 | 14.30 | 14.30 | 14.30 | 14.30 | 14.30 |
| | 2 | | | | | | |
| Pigment (carbon black) | | 7.00 | 7.00 | 7.00 | 7.00 | 7.00 | 7.00 |
| Storage stabilizer | | 0.60 | 0.60 | 0.60 | 0.60 | 0.60 | 0.60 |
| Epoxy resin | | | | | | | |
| Ethyl acetate | | 36.46 | 18.30 | 12.30 | 18.30 | 18.30 | 18.30 |
| Dimethyl carbonate | | 32.87 | 21.70 | 11.70 | 14.70 | 14.70 | 14.70 |
| Moisture absorbent | | 0.36 | 0.36 | 0.36 | 0.36 | 0.36 | 0.36 |
| Dispersant | | 1.40 | 1.40 | 1.40 | 1.40 | 1.40 | 1.40 |

[Table 3]

| Component(unit: g) | | Experimental Example 13 | Experimental Example 14 | Experimental Example 15 | Experimental Example 16 | Experimental Example 17 |
|---|---|---|---|---|---|---|
| First silane oligomer | 1 | 36.33 | 36.33 | 36.33 | | |
| | 2 | | | | 39.82 | 39.82 |
| Second silane oligomer | | | | 16.00 | 7.67 | 16.00 |
| Comparative silane oligomer | 1 | | | | | |
| | 2 | | | | | |
| Comparative silane compound | 1 | | | | | |
| | 2 | 7.00 | | | | |
| Acrylic polymer | 1 | 14.30 | 14.30 | 14.30 | | |
| | 2 | | | | 15.67 | 15.67 |
| Pigment (carbon black) | | 7.00 | | | | |
| Storage stabilizer | | 0.60 | 0.60 | 0.66 | 0.66 | 0.66 |
| Epoxy resin | | | | | 3.00 | |
| Ethyl acetate | | 18.30 | 24.30 | 18.06 | 17.06 | 14.06 |
| Dimethyl carbonate | | 14.70 | 23.70 | 15.11 | 16.11 | 14.11 |
| Moisture absorbent | | 0.36 | 0.36 | | | |
| Dispersant | | 1.40 | | | | |

The manufacturer and product name of each component used in the experimental examples is presented in Table 4 below.

[Table 4]

| Component | | Compound name, or manufacturer and product name |
|---|---|---|
| Second silane oligomer | | Mercapto silane oligomer containing three -SH groups and one -OH group in a molecule<br>Mw:369<br>Density:(25°C)1.105g/ml<br>Viscosity: (25°C) 400cPs |
| Comparative silane oligomer | 1 | Epoxy silane oligomer(CoatOsil M200) |
| | 2 | Isocyanurate silane oligomer(Silquest Y-19020) |
| Comparative silane compound | 1 | 3-aminopropylsilane hydrolysate |
| | 2 | 3-Mercapto propyl trimethoxy silane |
| storage stabilizer | | Diethyl malonate(DEM) |
| Epoxy resin | | YD-128 |
| moisture absorbent | | sodium/calcium aluminosilicate |
| Dispersant | | Hyperbranched polyester (BYK-2152) |

**Evaluation of Physical Properties**

The physical properties of the primer compositions of the experimental examples were measured by the method below. The results are shown in Table 5 below.

(1) Weather resistance

The compositions of the experimental examples were applied to the glass surface with an application area of 25 mm (width) x 150 mm (length) x 3 mm (height), and left for 72 hours under conditions of 20°C and 65% relative humidity, and the specimens were exposed to XENON WEATHER-O-METER (WOM) for 1,000 hours. After the exposure, the specimens were taken out and left at 20°C for 1 hour. The primer layer at one end of each specimen was cut with a 15 mm knife, and the coating material was held with one hand and peeled off by using a knife at a 30° angle, followed by curing. Afterwards, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.

At this time, the XENON test was performed under the conditions according to MS600-35.

(2) Preservability

The viscosities of the compositions were measured at 20°C with Ford Cup No. 4, and measured again after storing the compositions at 60°C for 10 days. The viscosity change rate (%) was then calculated based on the initial viscosity, and the evaluation criteria were as follows: if the viscosity change rate (%) was less than 10%, it was evaluated as Excellent, if it was between 10 and 20%, it was evaluated as Good, and if it was over 20%, it was evaluated as Poor.

(3) Initial adhesion

The primer compositions were applied to a glass surface, and their initial adhesion was evaluated according to the criteria presented in FIG. 1 by the Cross Cut Test (Taping Method) at intervals of 3 hours, 6 hours and 9 hours under conditions of 20°C and 65% relative humidity.

(4) Low-temperature adhesion

The compositions of the experimental examples were applied to a glass surface with an application area of 25 mm (width) x 150 mm (length) x 3 mm (height), and left for 7 days under conditions of 5°C and 40% relative humidity. An adhesion test was performed 7 days after the adhesive was applied, and the state of the adhesive interface was observed. At this time, for the adhesion test, the primer layer at one end of each specimen was cut with a 15 mm knife, and the coating material was held with one hand and peeled off by using a knife at a 30° angle, followed by curing. Thereafter, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.

(5) Pot life adhesion

The compositions were applied to glass with an application area of 120 mm (length) x 10 mm (width) x 5 mm (thickness), and left for three months under conditions of 20°C and 65% relative humidity, and a urethane sealant (Manufacturer: KCC, Product Name: PU9510(S-P2P)) and an adhesive (Manufacturer: KCC, Product Name: PU9370-BTX) were pressed thereon to prepare specimens.

The specimens were preserved under conditions of 20°C and 65% relative humidity. An adhesion test was performed 7 days after the adhesive was applied, and the state of the adhesive interface was observed. At this time, for the adhesion test, the primer layer at one end of each specimen was cut with a 15 mm knife, and the coating material was held with one hand and peeled off by using a knife at a 30° angle, followed by curing. Thereafter, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.

(6) Appearance

Primers were applied to a glass surface, and its appearance was visually assessed.

◎ (Good gloss, uniform coating)

◦ (Lower gloss, uniform coating)

△ (Lower gloss, uneven coating)

X (No gloss, uneven coating)

(7) Chemical resistance

The compositions of the experimental examples were applied to a glass surface with an application area of 25 mm (width) x 150 mm (length) x 3 mm (height), left for 72 hours under conditions of 20°C and 65% relative humidity, and then immersed in WINDOW WASHER liquid for 336 hours, taken out, and left for 1 hour at 20°C. Thereafter, the primer layer at one end of each specimen was cut with a 15 mm knife, and the coating material was held with one hand and peeled off by using a knife at a 30° angle, followed by curing. Thereafter, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.

WINDOW WASHER liquid/distilled water = 1/1 (volume ratio)

(8) Water resistant adhesion

The compositions of the experimental examples were applied to a glass surface with an application area of 25 mm (width) x 150 mm (length) x 3 mm (height), left for 72 hours under conditions of 20°C and 65% relative humidity. The specimens were then left in 40°C hot water for 336 hours, taken out and left at 20°C for 1 hour. Thereafter, the primer layer at one end of each specimen was cut with a 15 mm knife, and the coating material was held with one hand and peeled off by using a knife at a 30° angle, followed by curing. Thereafter, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.

[Table 5]

| Physical Properties | Weather resistance | Preservability | Initial adhesion (3 hours) | Low-temperature adhesion (5°C) | Pot life adhesion | Appearance | Chemical resistance | Water resistant adhesion |
|---|---|---|---|---|---|---|---|---|
| Experimental Example 1 | ○ | ◎ | ◎ | ◎ | ◎ | ◎ | ◎ | ◎ |
| Experimental Example 2 | ○ | ◎ | ◎ | ◎ | ◎ | ◎ | ◎ | ◎ |
| Experimental Example 3 | ○ | ◎ | ○ | ◎ | ◎ | ◎ | ◎ | ◎ |
| Experimental Example 4 | ○ | ◎ | ○ | ◎ | ◎ | ◎ | ◎ | ◎ |
| Experimental Example 5 | ○ | ◎ | ◎ | ◎ | ◎ | ○ | ◎ | ○ |
| Experimental Example 6 | ○ | ◎ | ◎ | ◎ | ◎ | ○ | ◎ | ○ |
| Experimental Example 7 | ○ | ◎ | ○ | ○ | X | ○ | ○ | ◎ |

(continued)

| Physical Properties | Weathe r resistan ce | Preservabi lity | Initial adhesi on (3 hours) | Low-temperat ure adhesion (5°C) | Pot life adhesi on | Appearan ce | Chemic al resistan ce | Water resista nt adhesi on |
|---|---|---|---|---|---|---|---|---|
| Experime ntal Exam-ple 8 | ○ | ◎ | x | X | ◎ | ○ | ◎ | ○ |
| Experime ntal Exam-ple 9 | ○ | △ | ◎ | ◎ | ◎ | ○ | ◎ | ◎ |
| Experime ntal Exam-ple 10 | ○ | ◎ | X | X | ◎ | ◦ | △ | Δ |
| Experime ntal Example 11 | ○ | Δ | X | X | ◎ | ○ | △ | Δ |
| Experime ntal Example 12 | ○ | Δ | X | X | ◎ | ○ | △ | ○ |
| Experime ntal Example 13 | ○ | Δ | X | X | ◎ | ○ | ○ | △ |
| Experime ntal Example 14 | ○ | ◎ | X | X | ◎ | ○ | ◎ | ○ |
| Experime ntal Example 15 | ○ | Δ | ◎ | ◎ | ◎ | ○ | ◎ | ◎ |
| Experime ntal Exam-ple 16 | △ | ◎ | ◎ | ◎ | ◎ | ○ | ○ | △ |
| Experime ntal Exam-ple 17 | Δ | Δ | ◎ | ◎ | ◎ | ○ | ◎ | ◎ |

◎: Excellent (Cf of at least 95%)
◦: Good (Cf of at least 90% Cf)
△: Weak (Cf of 60 to 90%)
X: Poor (Cf of less than 70%)
Cf: Cohesive Failure

As shown in Table 5, the primer compositions of Experimental Examples 1 to 6 were all excellent in preservability, low-temperature adhesion, pot life adhesion and chemical resistance, and excellent or good in weather resistance, initial adhesion, appearance and water resistant adhesion.

Experimental Example 7 comprising no first silane oligomer was poor in adhesion, and Experimental Examples 8, 10 to 14 comprising no second silane oligomer were poor in initial adhesion and low-temperature adhesion. Experimental Examples 9, 15, and 17 comprising a second silane oligomer in an amount exceeding the amount according to the present invention, were poor in preservability and/or weather resistance. Experimental Example 16 comprising an epoxy resin as an additive was poor in adhesion and water resistance.

## Claims

1. A primer composition for glass adhesives, comprising a first silane oligomer, a second silane oligomer, and an acrylic polymer, wherein

   the first silane oligomer comprises an amino group and an epoxy group, and
   the second silane oligomer comprises a mercapto group and a hydroxyl group.

2. The primer composition for glass adhesives according to claim 1, wherein the second silane oligomer further comprises a cyclodioxy structure.

3. The primer composition for glass adhesives according to claim 1, wherein
   the second silane oligomer comprises a compound represented by the following formula 1:

   [Formula 1]

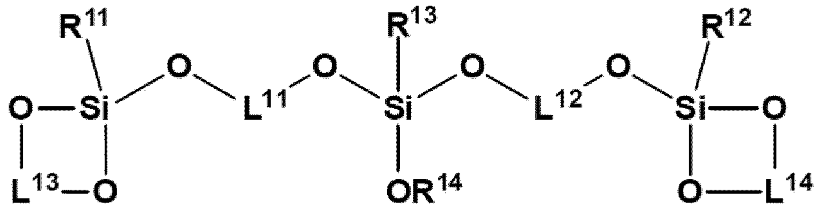

   Wherein,

   $R^{11}$, $R^{12}$, and $R^{13}$ are each independently a straight-chain or branched-chain $C_{1-10}$ alkyl group substituted with a mercapto group,
   $L^{11}$, $L^{12}$, $L^{13}$, and $L^{14}$ are a straight-chain or branched-chain $C_{1-10}$ alkylene group, and
   $R^{14}$ is a hydrogen, or a straight-chain or branched-chain $C_{1-10}$ alkyl group substituted with a hydroxyl group.

4. The primer composition for glass adhesives according to claim 1, wherein
   the first silane oligomer is prepared from a first silane composition comprising an amino silane and an epoxy silane in a weight ratio of 1:1.5 to 3.2, and has an epoxy equivalent weight (EEW) of 2,000 to 15,000 g/eq and a weight average molecular weight of 500 to 3,000 g/mol.

5. The primer composition for glass adhesives according to claim 1, wherein
   the acrylic polymer is prepared by polymerizing an acrylic composition comprising an alkyl group-containing (meth) acrylate monomer, and a hydroxyl group- and an aromatic ring-containing (meth)acrylate monomer.

6. The primer composition for glass adhesives according to claim 1, wherein
   the primer composition for glass adhesives comprises 25 to 45 parts by weight of the first silane oligomer, 3 to 15 parts by weight of the second silane oligomer, and 10 to 20 parts by weight of the acrylic polymer, per 100 parts by weight of the primer composition for glass adhesives.

FIG. 1

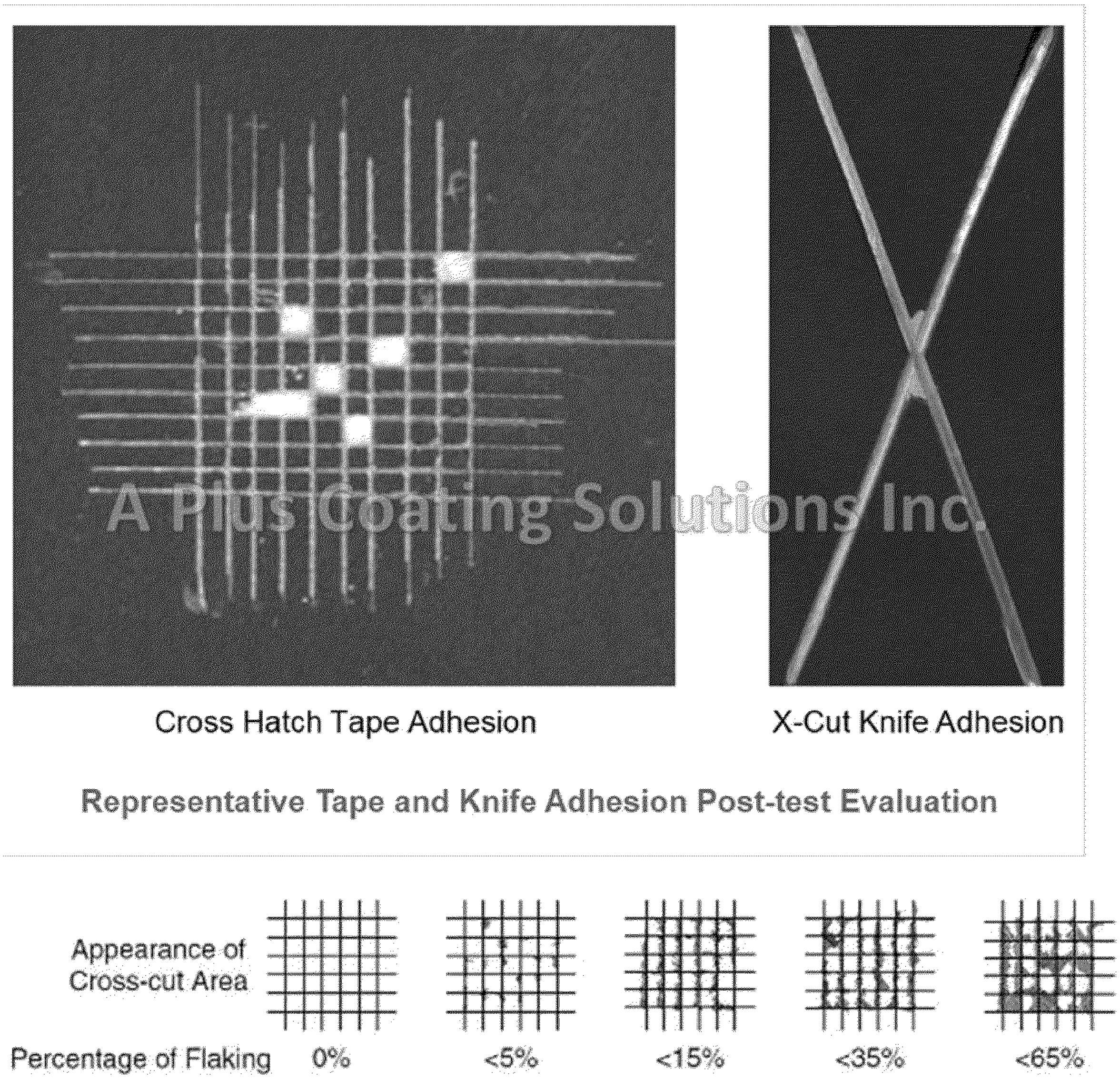
A Plus Coating Solutions Inc.
Cross Hatch Tape Adhesion
X-Cut Knife Adhesion
Representative Tape and Knife Adhesion Post-test Evaluation
Appearance of Cross-cut Area
Percentage of Flaking
0%
<5%
<15%
<35%
<65%

**INTERNATIONAL SEARCH REPORT**

International application No. **PCT/KR2023/009351**

**A. CLASSIFICATION OF SUBJECT MATTER**

**C09J 183/08**(2006.01)i; **C09J 183/06**(2006.01)i; **C09J 4/00**(2006.01)i; **C09J 5/02**(2006.01)i; **C08L 33/06**(2006.01)i; **C08K 5/548**(2006.01)i; **C08K 5/549**(2006.01)i; **C08K 5/544**(2006.01)i; **C08K 5/5435**(2006.01)i; **C08F 220/18**(2006.01)i

According to International Patent Classification (IPC) or to both national classification and IPC

**B. FIELDS SEARCHED**

Minimum documentation searched (classification system followed by classification symbols)

C09J 183/08(2006.01); C03C 27/04(2006.01); C08G 59/14(2006.01); C08K 5/548(2006.01); C08L 33/04(2006.01); C09D 5/00(2006.01); C09J 133/04(2006.01); C09J 133/14(2006.01); C09J 4/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유리 접착제(glass adhesive), 실란(silane), 아크릴 폴리머(acryl polymer), 머캅토기 (mercapto group)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0109905 A (KCC CORPORATION) 07 September 2021 (2021-09-07)<br>See claims 1-3; and paragraphs [0024]-[0026], [0050] and [0066]-[0088]. | 1-6 |
| Y | KR 10-2017-0137757 A (MOMENTIVE PERFORMANCE MATERIALS INC.) 13 December 2017 (2017-12-13)<br>See claims 1 and 4; and paragraphs [0005], [0006] and [0055]-[0056]. | 1-6 |
| A | KR 10-2021-0112625 A (KCC CORPORATION) 15 September 2021 (2021-09-15)<br>See entire document. | 1-6 |
| A | KR 10-2012-0003355 A (CHEIL INDUSTRIES INC.) 10 January 2012 (2012-01-10)<br>See entire document. | 1-6 |
| A | KR 10-2021-0039745 A (KCC CORPORATION) 12 April 2021 (2021-04-12)<br>See entire document. | 1-6 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **31 October 2023** | **31 October 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/009351**

| Patent document cited in search report | Publication date (day/month/year) | Patent family member(s) | Publication date (day/month/year) |
|---|---|---|---|
| KR 10-2021-0109905 A | 07 September 2021 | CN 115135729 A | 30 September 2022 |
| | | EP 4112693 A1 | 04 January 2023 |
| | | EP 4112693 A4 | 26 July 2023 |
| | | KR 10-2396091 B1 | 10 May 2022 |
| | | WO 2021-172733 A1 | 02 September 2021 |
| KR 10-2017-0137757 A | 13 December 2017 | BR 112017022090 A2 | 03 July 2018 |
| | | BR 112017022090 B1 | 02 August 2022 |
| | | CN 107636038 A | 26 January 2018 |
| | | CN 107636038 B | 22 September 2020 |
| | | EP 3283577 A1 | 21 February 2018 |
| | | EP 3283577 B1 | 17 July 2019 |
| | | JP 2018-518547 A | 12 July 2018 |
| | | JP 6783245 B2 | 11 November 2020 |
| | | KR 10-2469861 B1 | 23 November 2022 |
| | | US 10106671 B2 | 23 October 2018 |
| | | US 10676594 B2 | 09 June 2020 |
| | | US 2017-0152369 A1 | 01 June 2017 |
| | | US 2019-0010309 A1 | 10 January 2019 |
| | | WO 2016-168107 A1 | 20 October 2016 |
| KR 10-2021-0112625 A | 15 September 2021 | CN 115135728 A | 30 September 2022 |
| | | EP 4116380 A1 | 11 January 2023 |
| | | EP 4116380 A4 | 26 July 2023 |
| | | KR 10-2396092 B1 | 10 May 2022 |
| | | WO 2021-177586 A1 | 10 September 2021 |
| KR 10-2012-0003355 A | 10 January 2012 | CN 102311710 A | 11 January 2012 |
| | | CN 102311710 B | 05 March 2014 |
| | | EP 2402407 A1 | 04 January 2012 |
| | | EP 2402407 B1 | 19 June 2013 |
| | | JP 2012-012537 A | 19 January 2012 |
| | | JP 5546973 B2 | 09 July 2014 |
| | | KR 10-1340540 B1 | 11 December 2013 |
| | | TW 201219521 A | 16 May 2012 |
| | | TW I461497 B | 21 November 2014 |
| | | US 2012-0004369 A1 | 05 January 2012 |
| | | US 8604130 B2 | 10 December 2013 |
| KR 10-2021-0039745 A | 12 April 2021 | CN 114466912 A | 10 May 2022 |
| | | EP 4039764 A1 | 10 August 2022 |
| | | KR 10-2424024 B1 | 25 July 2022 |
| | | WO 2021-066369 A1 | 08 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20170016433